# EUROPEAN PATENT SPECIFICATION

(11) **EP 3 511 200 B1**
(45) Date of publication and mention of the grant of the patent: **10.11.2021**
(21) Application number: 19151265.6
(22) Date of filing: 10.01.2019
(51) Int. Cl.: B60M 1/28, H02G 7/16, B60L 5/19

(54) **DEVICE FOR DISPENSING AN ANTI-ICE AND/OR ANTI-WEAR FLUID ON A CABLE FOR THE TRANSMISSION OF ELECTRIC CURRENT**
VORRICHTUNG ZUR ABGABE EINER EISSCHUTZ- UND/ODER VERSCHLEISSSCHUTZFLÜSSIGKEIT AUF EIN KABEL ZUR ÜBERTRAGUNG VON ELEKTRISCHEM STROM
DISPOSITIF POUR DISTRIBUER UN FLUIDE ANTI-GLACE ET/OU ANTI-USURE SUR UN CÂBLE POUR LA TRANSMISSION DE COURANT ÉLECTRIQUE

(30) Priority: 11.01.2018 IT 201800000757
(43) Date of publication of application: 17.07.2019
(73) Proprietor: Dipsa Technes S.r.l., 40013 Castel Maggiore (Bologna) (IT)
(72) Inventor: ODORICI, FAUSTO, 40013 CASTEL MAGGIORE (BOLOGNA) (IT)
(74) Representative: Fuochi, Riccardo

(56) References cited:
- EP-A1- 3 051 252
- CN-A- 101 483 330
- DE-A1-102004 045 904
- DE-A1-102011 076 615
- DE-A1-102014 111 120
- JP-A- H0 571 921

## Description

### TECHNICAL FIELD OF THE INVENTION

The present invention relates to a device for dispensing an anti-freeze and/or anti-wear fluid, such as a liquid or air or gas or mist, on to a cable for the transmission of electric current the device being able to be installed, for example, at the top of vehicles, such as vehicles for the maintenance of cables for conveying electric current and also for other types of electric power supply cables, e.g. for power supply to trains, tramways or trolley buses.

### DESCRIPTION OF THE PRIOR ART

Devices are known for monitoring the state of an electric cable, usually high voltage, which comprise rollers or similar devices for engagement with a cable, designed to allow a reliable engagement with the electric cable to be monitored all along the cable length, in particular at bends or in the presence of slope changes. Such devices may include various accessories or components, such as ice-breaker rollers or components for dispensing an anti-freeze liquid.

However, the solutions proposed so far have complex and costly systems to guarantee the correct tracking of the cables throughout the course and/or development of same.

The state of the art documents relating to the present invention are as follows.

DE 10 2014 111120 A1 describes an apparatus for applying a de-icing agent (antifreeze liquid) to a cable of an overhead power line for vehicles with electric drive, with particular regard to measures for being able to spray the liquid when voltage is present in the power line.

The spraying head is located on the pantograph of the electric drive vehicle and is therefore constantly in contact, via a sliding block, with the overhead power line. JP H05 71921 A describes a device for measuring the wear of the cable of an overhead power line for electric drive vehicles.

The measurement takes place via an optical system that projects a laser beam transversely to the cable of the overhead power line, the remaining part of the beam that goes beyond the cable is detected by a receiving unit, which is preferably a CCD sensor. The device is in contact with the cable of the overhead line through two guide rollers.

DE 10 2004 045904 A1 describes a device for applying antifreeze to a cable of an overhead power line for vehicles with electric drive fixed to the pantograph and therefore in constant contact with the power line. The device is equipped with a set of nozzles arranged along the entire pantograph width. The nozzles are activated selectively by means of sensors which detect the transverse position of the cable, so as to limit antifreeze waste.

CN 101 483 330 A describes a de-icing apparatus for electrical devices, comprising a boiler for obtaining, through microwaves, superheated steam which is expelled by a nozzle supported by an arm, sensors measuring the temperature and pressure of the boiler, while a control unit controls the microwave power.

EP 3 051 252 A1 describes a device for measuring the cable wear of an overhead power line for electrically driven vehicles with measuring instruments that are located on the roof of the vehicle and fixed to rotating supports which allow the image obtaining field to be orientated towards the power supply cable.

### OBJECTS OF THE INVENTION

An object of the present invention is to provide a new device for dispensing an anti-freeze and/or anti-wear fluid, such as a liquid or air or gas or mist, on to a cable for the transmission of electric current.

Another object of the present invention is to provide a device as above mentioned that is capable of correctly adapting to an electric cable along its entire course and/or development, in straight lines, in corners and in upward or downward sections, without any contact with the same cable.

Another object of the present invention is to provide a device that is adaptable to different types of electric cable and to different arrangements of an electric power supply cable.

Another object of the present invention is to provide a cable guide device or tracker of the electric cable of an overhead line that is constructively simple.

Another object of the present invention is to provide a vehicle supplied with a device as indicated above.

According to an aspect of the invention a device is provided according to claim 1. According to another aspect of the invention a method is provided according to claim 14.

Dependent claims refer to preferred and advantageous embodiments of the invention.

### BRIEF DESCRIPTION OF THE DRAWINGS

Other characteristics and advantages of the invention will be more apparent from the description of an example of embodiment of a device, illustrated for guidance only in the accompanying drawings wherein:

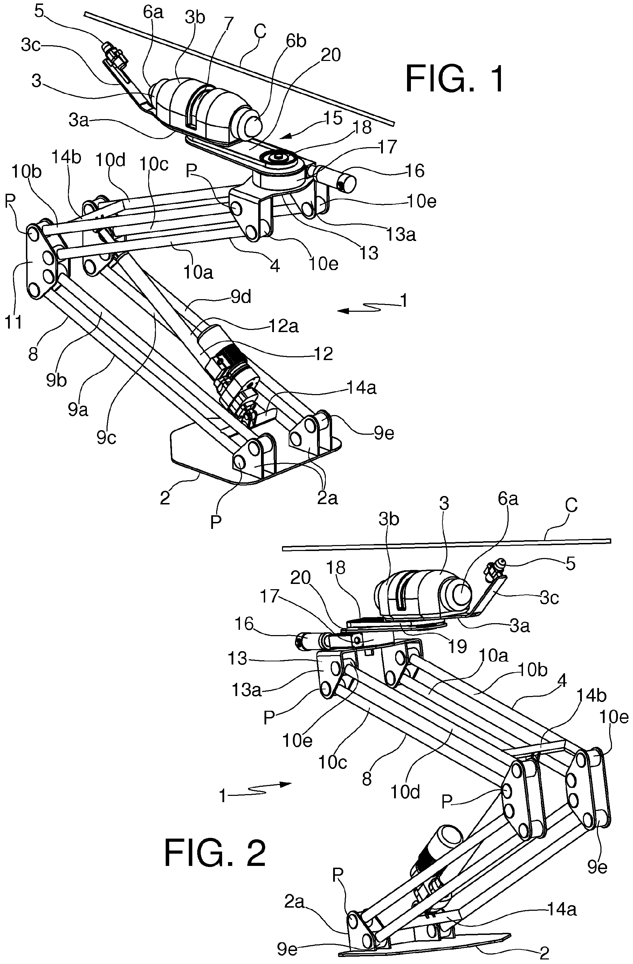

- figures 1 and 2 are perspective views from respective sides of a device according to the present invention with a respective electrical cable;

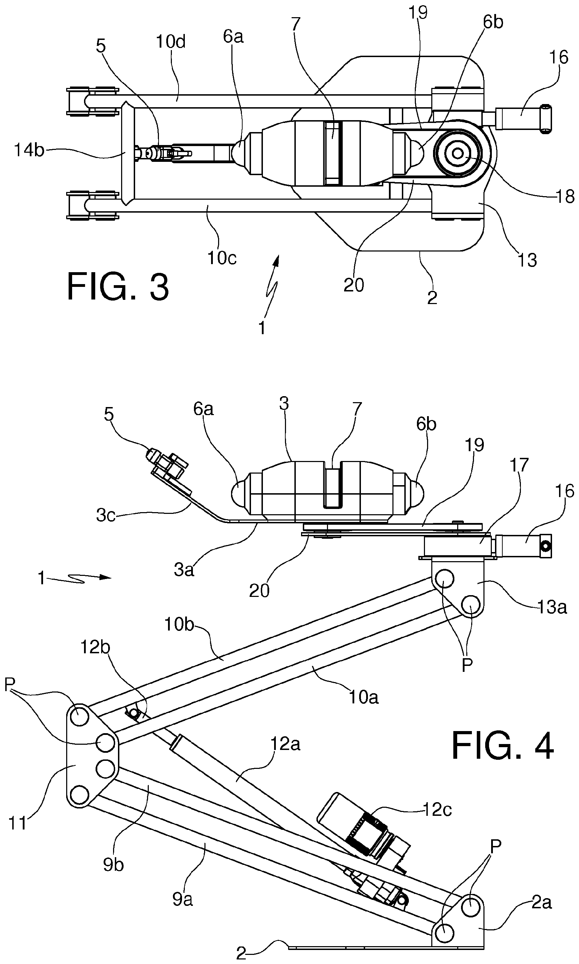

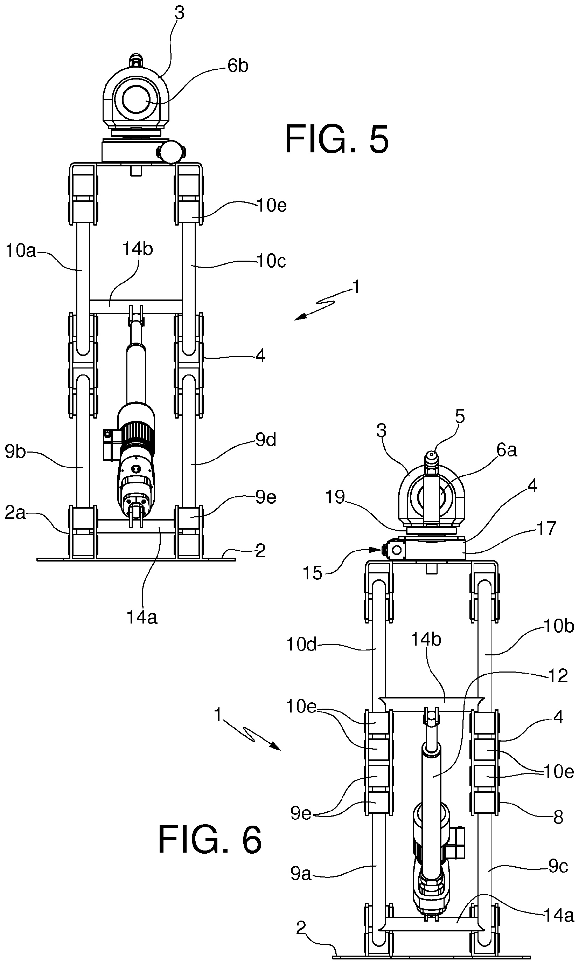

- figures 3 to 6 are views from the top, side, front and rear - respectively, of the device of figure 1.

In the accompanying drawings the same parts or components are indicated by the same reference numerals.

### EMBODIMENTS OF THE INVENTION

With reference to the attached figures, a device 1 is shown for supplying an anti-freeze and/or anti-wear fluid on a cable C for the transmission of electric current, such as a high voltage cable and/or for evaluating the wear of a cable C for the transmission of electric current, such as a high voltage cable, the device 1 comprising at least one base structure 2 attachable to a vehicle (not shown in figures) and supporting at the top at least one working unit 3, in use, of the cable C. A device according to the present invention can also be used for monitoring trolley bus or tramway cables, and other similar vehicles powered by an overhead power line.

In the following discussion reference will be made to an anti-freeze fluid, but it must be taken into account that, in general, this fluid can be an anti-freeze and/or anti-wear fluid or liquid and/or gas and/or vapour.

The device 1 further comprises lifting/lowering and/or articulation and/or displacement means 4.

On the other hand, the working unit 3 comprises at least one dispensing component of an anti-freeze fluid 5, such as a liquid or air or gas or mist and/or a sensor means 6a, 6b for displaying the front and rear zones with respect to the working unit 3. The sensor means 6a, 6b may also comprise means for detecting the wear of a cable.

The anti-freeze fluid dispensing component 5 may be designed to dispense liquid flow rates proportional to the forward movement speed of the device 1, so as to ensure correct application of the anti-freeze fluid under different working conditions. In this regard, naturally, specific means will be provided for controlling or varying the dispensing flow of the dispenser component 5 driven or driveable by the control unit as a function of the forward movement speed of the device 1 or rather, of the vehicle on which the device is mounted, the variation of the dispensing flow of the dispensing component 5 being also controllable or correctable according to other parameters with respect to the forward movement speed.

Moreover, the device 1, for example the working unit 3 of the same device 1, comprises at least one main camera and/or one sensor component 7, optionally protected by a special glass or protection screen, which detects the course and/or development of the cable C.

The device 1 also comprises a control unit (not shown in figures) designed to receive data from the camera or from the sensor component 7 in order to control the lifting/lowering and/or articulation and/or displacement means 4 accordingly, to move the working unit 3 and therefore the dispensing component of an anti-freeze fluid 5 and/or the sensor means 6a, 6b for detecting the wear of a cable according to the course and/or development of the cable C.

More particularly, the control unit is designed to receive data input from the camera and/or sensor component 7, so as to drive the lifting/lowering and/or articulation and/or displacement means 4 in such as way as to allow the device 1 to follow the course and/or development of the cable C and act on it without coming into contact with it.

In this regard, the control unit comprises a special software for recognising or analysing a cable C or a plurality of cables C having different characteristics.

Moreover, the device 1, having to act - for example applying an anti-freeze fluid or detecting wear - on a cable C throughout the longitudinal development of the latter, is driven, by means of a respective vehicle, substantially below or to one side with respect to a cable C.

If the cable C has curved sections and/or successive sections at different heights, the control unit of the device 1, thanks to the data obtained from the main camera and/or from the sensor component 7, acts on the lifting/lowering and/or articulation and/or displacement means 4, so as to raise/lower and/or angularly move the work unit 3, adapting it to the course and/or development of the cable C, without requiring any special mechanical components, such as rollers or the like, in contact with the cable C.

Naturally, it is important that the control unit is provided with a specific control logic, for example of the proportional-integral-derivative type, in acronym form PID, so as to appropriately control the lifting/lowering and/or articulation and/or displacement means 4, in order to avoid that the working unit 3 goes out of the unwinding range of the cable C, or that operation instability may occur.

In this regard, the device 1 could also provide means for stopping the movement or end the travel of the working unit 3, if necessary, also adjustable, in particular, means for stopping the displacement around a vertical axis.

As far as the main camera 7 is concerned, it can comprise at least one laser or optical camera, for example a laser scanning camera.

The main camera 7 which is facing upwards, with e.g. a substantially vertical direction of detection, can have a scanning aperture or field of 360°, or of 60°, i.e. from +30° to -30°, or between +90° and -90°, between +60° and -60° or between +45° and -45° with respect to a vertical or inclined axis with respect to the vertical. Also, the main camera 7 may have an infrared light source.

The scanning frequency of the video camera 7 can be from 0 to 300 Hz or 25 Hz, 35 Hz, 50 Hz or 75 Hz etc. while the angular resolution can be, for example, 0.01 or 0.25°, 0.5° or 1° or 2° or 3° or 4° or 5°.

The detection distance can be comprised between 0 and 10 m. In place of or in addition to one or more cameras 7, the device 1 can comprise at least one sensor component, such as a proximity sensor, for example inductive or capacitive or optical, etc.

With reference to the non-limiting embodiment illustrated in the figures, the structure of the working unit 3 comprises a bracket or shelf 3a supporting a head 3b for containing the camera 7 and the dispensing component of an anti-freeze fluid 5, for example configured as a gun or nozzle, the latter being able to be supported or fixed at a projecting portion 3c of the bracket 3a.

The device 1 or rather, the head 3b can also be provided with two auxiliary cameras 6a, 6b, one of which is designed, for example, to monitor the state of wear of the cable, a camera 6a directed towards the rear part of the device 1 and a camera 6b directed towards the front part of the device 1. The camera 6a can alternatively be used to check the correct operation of the device 1, while the camera 6b can be provided to allow for checking the presence of railway pointwork or obstacles.

It is also possible to provide for respective lighting devices, for example lights, also of the LED type, intended to illuminate the shooting area of a respective camera 7, 6a, 6b.

In regard to the head 3b, in particular, this can have an elongated configuration with the two auxiliary cameras 6a, 6b at the ends and the main camera 7 housed in an intermediate portion of the head 3b.

With reference to the non limiting implementation example shown in the figures, the lifting/lowering and/or articulation and/or displacement means 4 of the working unit 3 with respect to the base structure 2 may include a lifting/lowering unit 8 comprising two or more arms 9a-9d, 10a-10d which allow for the articulation of the working unit 3 with respect to the base structure 2, configured as a plate, or with respect to a first top plate 13 of the lifting/lowering unit 8 and attached to the working unit 3.

More particularly, one or more first arms 9a-9d may be provided pivoted on one side to the base plate 2, i.e. to the first brackets or gussets 2a thereof, for example facing upwards from the base plate 2 and, on the other side, to at least one intermediate component or intermediate junction 11, and one or more second arms 10a-10d pivoted on one side to the intermediate junction component 11 and on the other side to the first plate 13, i.e. to second brackets or gussets 13a thereof, for example facing downwards from the first plate 13.

The lifting/lowering unit 8 can further comprise at least one actuator 12, for example linear of an electric, or pneumatic or fluid-dynamic type.

The actuator 12 can have a cylinder 12a wherein a stem 12b is slidably mounted driven by an electric motor 12c, or pneumatically or fluid-dynamically. The cylinder 12a or the stem 12b is fixed or pivoted to the first arm or arms 9a-9d, while the stem 12b or the cylinder 12a is fixed or pivoted to the second arm or arms 10a-10d.

In this respect, at least two first arms 9a-9d or two pairs of first arms 9a-9d may be provided, as well as a first connecting crosspiece 14a thereof and the cylinder 12a or the stem 12b is fixed or pivoted to the connecting crosspiece 14a.

The lifting/lowering unit 8 may also include at least two second arms 10a-10d or two pairs of second arms 10a-10d, as well as a second connecting crosspiece 14b thereof and the stem 12b or the cylinder 12a is fixed or pivoted to the second connecting crosspiece 14b.

As will be understood, by controlling the actuation of the actuator 12, the extension of the stem 12b from the cylinder 12a or the retraction of the stem 12b into the cylinder 12a is determined, causing the first arms 9a-9d and the second arms 10a-10d to move, for example around horizontal axes defined by respective pins P, so as to control the lifting and lowering of the working unit 3 with respect to the base structure 2 by the lifting/lowering unit 8.

More particularly, according to the non-limiting embodiment illustrated in the figures, one or more arms 9a-9d, 10a-10d comprise an end sleeve 9e-10e at one or both of its ends, designed to be arranged aligned with one or more holes of a respective bracket or gusset 2a, 13a and attached thereto by respective pins P.

The at least one intermediate component or intermediate junction component 11 may comprise one or more junction plates 11 possibly provided with holes for the passage of pins P. More specifically, two or more pairs of junction plates 11 are provided, between the plates 11 of each pair, there being arranged and pivoted by means of pins P the end of one or more arms 9a-9d, 10a-10d, for example the end of at least a first arm 9a-9d and the end of at least a second arm 10a -10d.

In addition or as an alternative to what is now described, the lifting/lowering and/or articulation and/or displacement means 4 of the working unit 3 with respect to the base structure 2, can include a displacement unit 15 of the working group 3 for example supported at the top of the lifting/lowering unit 8.

The displacement unit 15 comprises a motor component possibly with a gearmotor 16 acting on a thrust bearing 17, associated in turn to a first end of a support plate 20, which supports the working unit 3 at a second end. The support plate 20 can be quickly turned to the right and left by the gear motor 16 so as to allow the working unit 3 to move sideways to follow the respective lateral progress of the cable C. The displacement unit 15 further comprises a mechanism which keeps the working unit 3 parallel to itself and substantially aligned with the cable C.

This mechanism can be realized in different ways. In the exemplary embodiment illustrated in the figures, the mechanism comprises a first toothed wheel or pulley 18 fixed to the first plate 13 and in a meshing or pulling engagement with a chain or belt 19, in turn in a meshing or pulling engagement also with a second toothed wheel or pulley (not shown in the figures) fixed or connected with a bracket or shelf 3a of the working unit 3.

The device 1 can then be equipped with electrostatic charging means of a cable or anti-freeze fluid, which are capable of electrostatically charging the anti-freeze fluid or liquid, for example with grease, or (electrostatically charging) the cable C, so as to ensure a good grip of the anti-freeze fluid on the tensioned cable C.

The anti-freeze fluid could be applied to the cable C through which electric current flows. In this case, all the parts of the device 1 that may be in electrical contact with the cable must be brought to the same electrical potential as the cable itself, to avoid electrical discharges or similar problems, or the anti-freeze fluid may also be applied to the C cable through which no current flows, in which case line current should be disconnected during maintenance.

The device can then be equipped with a compressor for powering the respective pneumatic components, and/or an electric generator, the compressor and the generator being suitably connected (pneumatically or electrically) with such components.

A tank of an anti-freeze fluid in fluid communication with the dispensing component 5 can then be provided.

The device can also include an operator panel with display, for example with keys and adjustment controls. The device can be equipped with an air blade to dry the cable or the fluid.

An object of the present invention is also a vehicle, for example a maintenance or cable inspection vehicle, comprising at least one device 1 as described above, such vehicle comprising at least one chassis mounted on wheels or tracks, for example for sliding or running on rails, while the base structure 2 is attached, for example bolted, pivoted or welded, to the vehicle chassis.

According to the present invention a method is also provided for dispensing an anti-freeze fluid, such as a liquid or air or gas or mist on a cable C for the transmission of electrical current, either powered or not powered, and/or for evaluating the wear of a cable C, by means of a vehicle as previously mentioned, having at least one device 1.

The method comprises the steps of: driving a vehicle, for example as indicated above, on a track or route below the cable C for the transmission of electric current, detecting the course and/or development of the cable C, without coming in contact with the latter, by means of at least one main camera and/or sensor component 7, in relation to the course and/or development of the cable C, detected in the previous step, to operate the lifting/lowering and/or articulation and/or displacement means 4, so as to allow the device 1 to act on the cable C without coming into contact with the latter, dispense an anti-freeze and/or anti-wear fluid, such as a liquid or air or gas or mist, by means of a dispensing component 5, and/or detect the wear of the cable C by the sensor means 6a, 6b.

The control unit of the device 1 comprises at least one input for receiving the data obtained from the main camera and/or the sensor component 7, and at least one output for operating the lifting/lowering and/or articulation and/or displacement means 4, for example by acting on the lifting/lowering unit 8 and/or on the displacement unit 15, so as to lift/lower and/or move the working unit 3 angularly, adapting it to the course and/or development of the cable C, without it being necessary to provide mechanical components, such as rollers or the like, designed to engage the cable C and to modify the arrangement of the device 1 or of the working unit 3 accordingly.

As it will be possible to ascertain, a device according to the present invention allows to correctly adapt to the course and/or the development of an electric cable, both in corners and upward or downward stretches, without having to come into contact with the cable itself, which involves a faster and more effective operation of the device according to the present invention with respect to prior solutions and, moreover, allows increased preservation and protection of the cable C.

Moreover, a device 1 is clearly adaptable to different types of electric cable and to different arrangements of an electric power cable, considering that there are no mechanical components of engagement with the cable C, which may not be suitable for any type of cable C.

Modifications and variations of the invention are possible within the scope of the appended claims.

## Claims

1. A device (1) for the dispensing of an anti-freeze and/or anti-wear fluid or liquid and/or gas and/or vapour on to a cable (C) for the transmission of electric current said device comprising at least one base structure (2) attachable to a cable maintenance vehicle and supporting at the top at least one working unit (3), in use, of said cable (C), said device comprising lifting/lowering and/or articulation and/or displacement means (4) of said at least one working unit (3) with respect to said base structure (2), said working unit (3) comprising at least one dispensing component of an anti-freeze fluid (5), whereby said working unit (3) comprises at least one main camera or sensor component (7) designed to detect the course and/or development of the cable (C), without coming into contact with same, as well as a control unit including at least one input to receive data concerning the current position of the cable (C) from the camera and/or sensor component (7), and said control unit including at least one output, the device **characterised by** said output being configured to drive the lifting/lowering and/or articulation and/or displacement means (4) so as to allow said working unit (3) and then said dispenser component (5) of an anti-freeze fluid to follow the course and/or development of the cable (C) and act on it without coming into contact with it.

2. A device according to claim 1, wherein said working unit (3) comprises a sensor means (6a, 6b) for detecting the wear of a cable (C).

3. A device according to claim 1 or 2, wherein said at least one main camera (7) comprises at least one laser or optical camera.

4. A device according to claim 2, wherein said at least one laser camera comprises a laser scanning camera facing upwards with an aperture or scanning field of 360°, or of 60°, i.e. from +30° to -30°, or between +90° and -90°, between +60° and -60° or between +45° and -45° with respect to a vertical or inclined axis with respect to the vertical.

5. A device according to claim 4, wherein the scanning frequency of said main video camera (7) can be from 0 to 300 Hz or 25 Hz, 35 Hz, 50 Hz or 75 Hz etc. while the angular resolution can be, for example, 0.01 or 0.25°, 0.5° or 1° or 2° or 3° or 4° or 5°.

6. A device according to any one of the preceding claims, wherein said lifting/lowering and/or articulation and/or displacement means (4) of the working unit (3) with respect to the base structure (2) include a lifting/lowering unit (8) comprising two or more arms (9a-9d, 10a-10d) which allow for the articulation of said at least one working unit (3) with respect to said base structure (2) or with respect to a first top plate (13) of the lifting/lowering unit (8) and attached the working unit (3).

7. A device according to the previous claim, wherein said lifting/lowering unit (8) comprises at least one first arm (9a-9d) pivoted at one end to said base structure (2) and at the other to at least one intermediate component or intermediate junction component (11), at least one second arm (10a-10d) pivoted at one end to said at least one intermediate junction component (11) and at the other end to said first plate (13) and then comprises at least one pneumatic, electric or fluid-dynamic actuator (12) designed to control the displacement of said at least one first arm (9a-9d) and of said at least one second arm (10a-10b), so as to control the lifting and lowering of the working unit (3) with respect to the base structure (2) by the lifting/lowering unit (8).

8. A device according to any one of the preceding claims, wherein said lifting/lowering and/or articulation and/or displacement means (4) include a displacement unit (15) of the working unit (3) about an axis that is, in use, vertical.

9. A device according to the previous claim, wherein said displacement unit (15) comprises a motor component possibly with a gearmotor (16) acting on a thrust bearing (17), associated in turn to a first end of a support plate (20), which supports the working unit (3) at a second end.

10. A device according to the previous claim, wherein said displacement unit (15) comprises means for maintaining said working unit (3) parallel to itself and substantially aligned with the cable (C).

11. A device according to the preceding claim, wherein said means for maintaining said working unit (3) parallel to itself and substantially aligned with cable C comprise a first toothed wheel or pulley (18) fixed to the first plate (13) and in a meshing or pulling engagement with a chain or belt (19), in turn in a meshing or pulling engagement also with a second toothed wheel or pulley fixed or connected with a bracket or shelf (3a) of the working unit (3).

12. A device according to any one of the preceding claims, comprising means for controlling or varying the anti-freeze fluid flow rate by said dispensing component (5) driven or driveable by the control unit according to the forward speed of the device (1).

13. A vehicle comprising at least one device according to any one of the preceding claims, said vehicle comprising at least one frame mounted on wheels or tracks, wherein said at least one base structure (2) is attached to said frame.

14. A method for dispensing an anti-freeze and/or anti-wear fluid or a liquid and/or a gas and/or a vapour on a cable for the transmission of electric current via a maintenance vehicle, comprising at least one chassis mounted on wheels or tracks, and a device (1) according to any claim from 1 to 13, including the phases of:
driving said vehicle for cable inspection on a track or route under a cable (C) for the transmission of electric current for electrically driven vehicles, for example trains, tramways or trolleybuses; whereby it comprises the steps of:
detecting the course and/or development of said cable (C), without coming into contact with same, by means of said at least one main camera and/or sensor component (7); **characterised by** the steps of in relation to the course and/or development of said cable (C), detected in the previous phase, operate said lifting/lowering and/or articulation and/or displacement means (4) so as to allow said device (1) to act on said cable (C) without coming into contact with the latter;
dispense an anti-freeze and/or anti-wear fluid, such as a liquid or air or gas or mist, by means of a dispensing component (5).

15. A method according to the preceding claim, comprising evaluating and detecting the wear of said cable (C) by sensor means (6a, 6b).

16. A method according to claim 14 or 15, wherein said device is conveyed, by means of a respective vehicle, substantially below or to the side with respect to a cable (C) and if the latter has curved sections and/or successive sections at different heights, the device control unit (1), thanks to the data obtained from the main camera or from the sensor component (7), acts on the lifting/lowering and/or articulation and/or displacement means (4), so as to raise/lower and/or move the work unit (3) sideways, adapting it to the cable (C), without requiring any special mechanical components in contact with the cable (C).

## Patentansprüche

1. Vorrichtung (1) zur Abgabe eines Frostschutz- und/oder Verschleißschutzfluids oder einer Flüssigkeit und/oder eines Gases und/oder Dampfes auf ein Kabel (C) für die Übertragung von elektrischem Strom, die besagte Vorrichtung umfassend mindestens eine Basisstruktur (2), die an einem Kabelwartungsfahrzeug anbringbar ist und, bei Verwendung, mindestens eine Arbeitseinheit (3) des besagten Kabels (C) auf der Oberseite trägt, die besagte Vorrichtung umfassend Hebe-/Senk- und/oder Gelenk- und/oder Verschiebemittel (4) der besagten mindestens einen Arbeitseinheit (3) in Bezug auf die besagte Basisstruktur (2), die besagte Arbeitseinheit (3) umfassend mindestens eine Abgabekomponente eines Frostschutzfluids (5), wobei die besagte Arbeitseinheit (3) mindestens eine Hauptkamera oder Sensorkomponente (7) umfasst, die dazu ausgelegt ist, den Verlauf und/oder die Entwicklung des Kabels (C) zu erkennen, ohne damit in Kontakt zu kommen, sowie eine Steuereinheit, beinhaltend mindestens einen Eingang zum Empfangen von Daten bezüglich der aktuellen Position des Kabels (C) von der Kamera und/oder Sensorkomponente (7), und die besagte Steuereinheit beinhaltend mindestens einen Ausgang, wobei die Vorrichtung **dadurch gekennzeichnet ist, dass** der besagte Ausgang zum Antreiben der Hebe-/Senk- und/oder Gelenk- und/oder Verschiebemittel (4) konfiguriert ist, um es der besagten Arbeitseinheit (3) und dann der besagten Abgabekomponente (5) eines Frostschutzfluids zu ermöglichen, dem Verlauf und/oder der Entwicklung des Kabels (C) zu folgen und darauf einzuwirken, ohne damit in Kontakt zu kommen.

2. Vorrichtung nach Anspruch 1, worin die besagte Arbeitseinheit (3) ein Sensormittel (6a, 6b) zur Erkennung des Verschleißes eines Kabels (C) umfasst.

3. Vorrichtung nach Anspruch 1 oder 2, worin die besagte mindestens eine Hauptkamera (7) mindestens eine Laser- oder optische Kamera umfasst.

4. Vorrichtung nach Anspruch 2, worin die besagte mindestens eine Laserkamera eine nach oben gerichtete Laserabtastkamera mit einer Blendenöffnung oder einem Abtastfeld von 360° oder von 60°, d. h. von +30° bis - 30°, oder zwischen +90° und -90°, zwischen +60° und -60° oder zwischen +45° und -45° in Bezug auf eine vertikale oder in Bezug auf die Vertikale geneigte Achse umfasst.

5. Vorrichtung nach Anspruch 4, worin die Abtastfrequenz der besagten Hauptvideokamera (7) von 0 bis 300 Hz oder 25 Hz, 35 Hz, 50 Hz oder 75 Hz usw. betragen kann, während die Winkelauflösung beispielsweise 0,01 oder 0,25°, 0,5° oder 1° oder 2° oder 3° oder 4° oder 5° betragen kann.

6. Vorrichtung nach irgendeinem der vorangegangenen Ansprüche, worin die besagten Hebe-/Senk- und/oder Gelenk- und/oder Verschiebemittel (4) der Arbeitseinheit (3) in Bezug auf die Basisstruktur (2) eine Hebe-/Senkeinheit (8) beinhalten, die zwei oder mehr Arme (9a-9d, 10a-10d) umfasst, die die Gelenkverbindung der besagten mindestens einen Arbeitseinheit (3) in Bezug auf die besagte Basisstruktur (2) oder in Bezug auf eine erste Oberplatte (13) der Hebe-/Senkeinheit (8) ermöglichen und die an der Arbeitseinheit (3) angebracht ist.

7. Vorrichtung nach dem vorangegangenen Anspruch, worin die besagte Hebe-/Senkeinheit (8) mindestens einen ersten Arm (9a-9d), der an einem Ende an der besagten Basisstruktur (2) und am anderen an mindestens einer Zwischenkomponente oder Zwischenverbindungskomponente (11) schwenkbar gelagert ist, mindestens einen zweiten Arm (10a-10d), der an einem Ende an der besagten mindestens einen Zwischenverbindungskomponente (11) und am anderen Ende an der besagten ersten Platte (13) schwenkbar gelagert ist, umfasst und dann mindestens einen pneumatischen, elektrischen oder fluiddynamischen Aktuator (12) umfasst, der dazu ausgelegt ist, die Verschiebung des besagten mindestens einen ersten Arms (9a-9d) und des besagten mindestens einen zweiten Arms (10a-10b) zu steuern, um das Heben und Senken der Arbeitseinheit (3) in Bezug auf die Basisstruktur (2) durch die Hebe-/Senkeinheit (8) zu steuern.

8. Vorrichtung nach irgendeinem der vorangegangenen Ansprüche, worin die besagten Hebe-/Senk- und/oder Gelenk- und/oder Verschiebemittel (4) eine Verschiebeeinheit (15) der Arbeitseinheit (3) um eine Achse beinhalten, die bei Verwendung vertikal ist.

9. Vorrichtung nach dem vorangegangenen Anspruch, worin die besagte Verschiebeeinheit (15) eine Motorkomponente umfasst, möglichst mit einem Getriebemotor (16), der auf ein Drucklager (17) einwirkt, das wiederum mit einem ersten Ende einer Tragplatte (20) verbunden ist, die die Arbeitseinheit (3) an einem zweiten Ende trägt.

10. Vorrichtung nach dem vorangegangenen Anspruch, worin die besagte Verschiebeeinheit (15) Mittel umfasst, um die besagte Arbeitseinheit (3) parallel zu sich selbst und im Wesentlichen ausgerichtet mit dem Kabel (C) zu halten.

11. Vorrichtung nach dem vorangegangenen Anspruch, worin die besagten Mittel, die die besagte Arbeitseinheit (3) parallel zu sich selbst und im Wesentlichen ausgerichtet mit dem Kabel (C) halten, ein erstes Zahnrad oder eine erste Riemenscheibe (18), das/die an der ersten Platte (13) befestigt ist und in einem Kämm- oder Zieheingriff mit einer Kette oder einem Riemen (19) steht, die/der wiederum in einem Kämm- oder Zieheingriff auch mit einem zweiten Zahnrad oder einer zweiten Riemenscheibe steht, das/die mit einer Halterung oder einem Gestell (3a) an der Arbeitseinheit (3) befestigt oder damit verbunden ist, umfassen.

12. Vorrichtung nach irgendeinem der vorangegangenen Ansprüche, umfassend Mittel zur Steuerung oder Veränderung der Frostschutzfluid-Durchflussmenge durch die besagte von der Steuereinheit angetriebene oder antreibbare Abgabekomponente (5) in Abhängigkeit von der Vorwärtsgeschwindigkeit der Vorrichtung (1).

13. Fahrzeug, umfassend mindestens eine Vorrichtung nach irgendeinem der vorangegangenen Ansprüche, das besagte Fahrzeug umfassend mindestens einen auf Rädern oder Raupen montierten Rahmen umfasst, worin die besagte mindestens eine Basisstruktur (2) an dem besagten Rahmen angebracht ist.

14. Verfahren zur Abgabe eines Frostschutz- und/oder Verschleißschutzfluids oder einer Flüssigkeit und/oder eines Gases und/oder eines Dampfes auf ein Kabel (C) für die Übertragung von elektrischem Strom über ein Wartungsfahrzeug, umfassend mindestens ein auf Rädern oder Raupen montiertes Fahrgestell und eine Vorrichtung (1) nach irgendeinem der Ansprüche 1 bis 13, einschließlich der Phasen des:
Fahrens des besagten Fahrzeugs zur Kabelinspektion auf einer Strecke oder Route unter einem Kabel (C) für die Übertragung von elektrischem Strom für elektrisch angetriebene Fahrzeuge, beispielsweise Züge, Straßenbahnen oder Oberleitungsbusse; wobei es die Schritte umfasst des:
Erkennens des Verlaufs und/oder der Entwicklung des Kabels (C), ohne damit in Kontakt zu kommen, mittels der besagten mindestens einen Hauptkamera und/oder Sensorkomponente (7);
**gekennzeichnet durch** die Schritte des, in Bezug auf den Verlauf und/oder die Entwicklung des besagten Kabels (C), der/die in der vorhergehenden Phase erkannt wurde, Betätigens der besagten Hebe-/Senk- und/oder Gelenk- und/oder Verschiebemittel (4), um es der besagten Vorrichtung (1) zu ermöglichen, auf das besagte Kabel (C) einzuwirken, ohne mit dem letzteren in Kontakt zu kommen;
Abgebens eines Frostschutz- und/oder Verschleißschutzfluids, wie beispielsweise einer Flüssigkeit oder Luft oder Gas oder Nebel, mittels einer Abgabekomponente (5) .

15. Verfahren nach dem vorangegangenen Anspruch, umfassend die Bewertung und Erkennung des Verschleißes des besagten Kabels (C) durch Sensormittel (6a, 6b).

16. Verfahren nach Anspruch 14 oder 15, worin die besagte Vorrichtung mittels eines jeweiligen Fahrzeugs im Wesentlichen unter oder seitlich in Bezug auf ein Kabel (C) befördert wird, und, wenn letzteres gekrümmte Abschnitte und/oder aufeinanderfolgende Abschnitte auf unterschiedlichen Höhen aufweist, die Vorrichtungssteuereinheit (1) dank der von der Hauptkamera oder von der Sensorkomponente (7) erhaltenen Daten auf die Hebe-/Senk- und/oder Gelenk- und/oder Verschiebemittel (4) einwirkt, um die Arbeitseinheit (3) zu heben/senken und/oder seitwärts zu verschieben, um sie an das Kabel (C) anzupassen, ohne irgendwelche besonderen mechanischen Komponenten in Kontakt mit dem Kabel (C) zu erfordern.

## Revendications

1. Dispositif (1) pour distribuer un fluide ou liquide et/ou gaz et/ou vapeur antigel et/ou anti-usure sur un câble (C) pour la transmission de courant électrique, ledit dispositif comprenant au moins une structure de base (2) attachable à un véhicule d'entretien de câble et supportant au sommet au moins une unité de travail (3), pendant l'utilisation, dudit câble (C), ledit dispositif comprenant des moyens de levage/abaissement et/ou d'articulation et/ou de déplacement (4) de ladite au moins une unité de travail (3) par rapport à ladite structure de base (2), ladite unité de travail (3) comprenant au moins un composant de distribution d'un fluide antigel (5), moyennant quoi ladite unité de travail (3) comprend au moins un composant principal de caméra ou de capteur (7) conçu pour détecter le trajet et/ou le développement du câble (C), sans entrer en contact avec celui-ci, ainsi qu'une unité de commande comprenant au moins une entrée pour recevoir des données concernant la position actuelle du câble (C) en provenance du composant de caméra et/ou de capteur (7), et ladite unité de commande comprenant au moins une sortie,
le dispositif étant **caractérisé en ce que** ladite sortie est configurée pour commander les moyens de levage/abaissement et/ou d'articulation et/ou de déplacement (4) de façon à permettre à ladite unité de travail (3) puis audit composant de distribution (5) d'un fluide antigel de suivre le trajet et/ou le développement du câble (C) et d'agir sans entrer en contact avec celui-ci.

2. Dispositif selon la revendication 1, dans lequel ladite unité de travail (3) comprend un moyen de capteur (6a, 6b) pour détecter l'usure d'un câble (C).

3. Dispositif selon la revendication 1 ou 2, dans lequel ladite au moins une caméra principale (7) comprend au moins une caméra laser ou optique.

4. Dispositif selon la revendication 2, dans lequel ladite au moins une caméra laser comprend une caméra à balayage laser orientée vers le haut avec un champ d'ouverture ou de balayage de 360°, ou de 60°, c.à.d. de +30° à -30°, ou entre +90° et -90°, entre +60° et - 60° ou entre +45° et -45° par rapport à un axe vertical ou incliné par rapport à la verticale.

5. Dispositif selon la revendication 4, dans lequel la fréquence de balayage de ladite caméra vidéo principale (7) peut aller de 0 à 300 Hz ou 25 Hz, 35 Hz, 50 Hz ou 75 Hz, etc. alors que la résolution angulaire peut être, par exemple, de 0,01 ou 0,25°, 0,5° ou 1° ou 2° ou 3° ou 4° ou 5°.

6. Dispositif selon l'une quelconque des revendications précédentes, dans lequel lesdits moyens de levage/abaissement et/ou d'articulation et/ou de déplacement (4) de l'unité de travail (3) par rapport à la structure de base (2) comprennent une unité de levage/abaissement (8) comprenant au moins deux bras (9a-9d, 10a-10d) permettant à l'articulation de ladite au moins une unité de travail (3) par rapport à ladite structure de base (2) ou par rapport à une première plaque supérieure (13) de l'unité de levage/abaissement (8) et fixée à l'unité de travail (3).

7. Dispositif selon la revendication précédente, dans lequel ladite unité de levage/abaissement (8) comprend au moins un premier bras (9a-9d) articulé à une extrémité sur ladite structure de base (2) et à l'autre sur au moins un composant intermédiaire ou composant de jonction intermédiaire (11), au moins un deuxième bras (10a-10d) articulé à une extrémité audit au moins un composant de jonction intermédiaire (11) et à l'autre extrémité à ladite première plaque (13) et comprend également au moins un vérin pneumatique, électrique ou dynamique à fluide (12) conçu pour commander le déplacement dudit au moins un premier bras (9a-9d) et dudit au moins un deuxième bras (10a-10b), de façon à commander le levage et l'abaissement de l'unité de travail (3) par rapport à la structure de base (2) par l'unité de levage/abaissement (8).

8. Dispositif selon l'une quelconque des revendications précédentes, dans lequel lesdits moyens de levage/abaissement et/ou d'articulation et/ou de déplacement (4) comprennent une unité de déplacement (15) de l'unité de travail (3) autour d'un axe qui est vertical pendant l'utilisation.

9. Dispositif selon la revendication précédente, dans lequel ladite unité de déplacement (15) comprend un composant de moteur éventuellement doté d'un motoréducteur (16) agissant sur un palier de butée (17), associé à son tour à une première extrémité d'une plaque de support (20), qui supporte l'unité de travail (3) à une deuxième extrémité.

10. Dispositif selon la revendication précédente, dans lequel ladite unité de déplacement (15) comprend des moyens pour maintenir ladite unité de travail (3) parallèle à elle-même et sensiblement alignée avec le câble (C).

11. Dispositif selon la revendication précédente, dans lequel lesdits moyens pour maintenir ladite unité de travail (3) parallèle à elle-même et sensiblement alignée avec le câble (C) comprennent une première roue dentée ou poulie (18) fixée à la première plaque (13) et en accouplement par engrènement ou traction avec une chaîne ou une courroie (19), à son tour en accouplement par engrènement ou traction avec une deuxième roue dentée ou poulie fixée ou raccordée à un support ou une étagère (3a) de l'unité de travail (3).

12. Dispositif selon l'une quelconque des revendications précédentes, comprenant des moyens pour contrôler ou modifier le débit du fluide antigel par ledit composant de distribution (5) entraîné ou entraînable par l'unité de commande selon la vitesse vers l'avant du dispositif (1).

13. Véhicule comprenant au moins un dispositif selon l'une quelconque des revendications précédentes, ledit véhicule comprenant au moins un châssis monté sur des roues ou des chenilles, dans lequel ladite au moins une structure de base (2) est fixée audit châssis.

14. Procédé de distribution d'un fluide ou d'un liquide et/ou un gaz et/ou une vapeur antigel et/ou anti-usure sur un câble pour la transmission de courant électrique par l'intermédiaire d'un véhicule d'entretien, comprenant au moins un châssis monté sur des roues ou des chenilles, et un dispositif (1) selon l'une quelconque des revendications 1 à 13, incluant les phases de:
conduire ledit véhicule d'inspection du câble sur une piste ou un itinéraire sous un câble (C) pour la transmission de courant électrique pour des véhicules à propulsion électrique, par exemple des trains, des tramways ou des trolleybus;
moyennant quoi il comprend les étapes de:
détecter le trajet et/ou le développement dudit câble (C), sans entrer en contact avec celui-ci, au moyen dudit au moins un composant principal de caméra et/ou de capteur (7);
**caractérisé par** les étapes de
en relation au trajet et/ou au développement dudit câble (C), détecté dans la phase précédente, d'utilisation desdits moyens de levage/abaissement et/ou d'articulation et/ou de déplacement (4) de façon à permettre audit dispositif (1) d'agir sur ledit câble (C) sans entrer en contact avec ce dernier;
distribution d'un fluide antigel et/ou anti-usure, tel qu'un liquide ou de l'air ou un gaz ou une brume, au moyen d'un composant de distribution (5).

15. Procédé selon la revendication précédente, comprenant l'évaluation et la détection de l'usure dudit câble (C) par un capteur (6a, 6b).

16. Procédé selon la revendication 14 ou 15, dans lequel ledit dispositif est transporté, au moyen d'un véhicule respectif, sensiblement en dessous ou sur le côté par rapport à un câble (C) et si ce dernier présente des sections incurvées et/ou des sections successives à des hauteurs différentes, l'unité de commande (1) du dispositif, grâce aux données obtenues de la caméra principale ou du composant de capteur (7), agit sur les moyens de levage/abaissement et/ou d'articulation et/ou de déplacement (4) afin de lever/abaisser et/ou déplacer l'unité de travail (3) latéralement, en l'adaptant au câble (C), sans nécessiter de composants mécaniques spéciaux en contact avec le câble (C).
